# EUROPEAN PATENT APPLICATION

(11) **EP 2 933 749 A1**
(43) Date of publication of application: **21.10.2015**
(21) Application number: 15158964.5
(22) Date of filing: 13.03.2015
(51) Int. Cl.: G06F 21/57, G06F 21/60

(54) **System security design support device, and system security design support method**

(30) Priority: 16.04.2014 JP 2014084570
(71) Applicant: Hitachi, Ltd., Tokyo 100-8280 (JP)
(72) Inventor: Hashimoto, Yoko, Tokyo, 100-8280 (JP); Kaji, Tadashi, Tokyo, 100-8280 (JP); Tanigawa, Yoshinobu, Tokyo, 100-8280 (JP); Iguchi, Shinya, Tokyo, 100-8280 (JP); Matsubara, Yukiko, Tokyo, 100-8280 (JP); Ando, Ryosuke, Tokyo, 100-8280 (JP)
(74) Representative: MERH-IP Matias Erny Reichl Hoffmann

(57) **Abstract**

Security measures taking into consideration significance of handled information is made applicable and prevents security requirement to be set in the system from missing, in system security design. In supporting requirement defining and measures planning, the system as the target of design is indicated divided in a plurality of zones and is classified into a path 420 communicably coupling the zones, a zone boundary 419 being a coupling part between the path 420 and each zone, and an in-zone 418, and has associated and registered to each a security requirement 403 and security measures 413 having measures to be taken divided into levels. The path 420 has also associated a level of transmitted data and the level 409 of the corresponding zone boundary 419 is determined according to the transmitted data level of the path.

## Description

### BACKGROUND

### Technical field

The present invention relates to a system security design support device, and a system security design support method.

### Related Art

System security standards have been recently provided in standards bodies and various industry groups, and the security requirements that are to be supported by the systems are listed in them. "Security and Privacy Controls for Federal Information Systems and Organizations (SP 800-53)" and "Guidelines for Smart Grid Cyber Security (NISTIR 7328)" provided by the National Institute of Standards and Technology (NIST), and "Critical Infrastructure Protection Standard (NERC CIP)" provided by the North American Electric Reliability Council (NERC) are examples of the standard security regulations (hereinafter also called "standards").

A security designer performs the steps of: 1. clarifying and dividing into zones the target system; 2. defining the significance of each zone based on the standard; 3. defining the security requirements to be satisfied in each zone based on the standard; 4. planning security measures for satisfying the security requirements; and 5. analyzing the system risk and reviewing the security requirement and details of the measures based thereon, for performing security design of the system in conformity with the above standards.

The load of such security design work increases tremendously. This situation may cause a decrease of productivity of security design work.

In order to handle such a problem Japanese Laid-Open Patent Publication No. 2008-234409, for example, discloses a security threat analysis support system which extracts access points (points that are accessible such as on an interface and communication paths) from components of the system which is to be the analysis target, and inputs security threat information for the extracted access points. With such a system that supports the security threat analysis based on access points enables an all-inclusive security threat analysis.

The use of a method where security requirements and security measures at the access points are organized utilizing a security threat analysis focusing on the access points, such as that in the above Japanese Laid-Open Patent Publication No. 2008-234409, hereinafter "Patent Document," is recognized to enable requirement definition and measures planning at the access points in all zones.

However, in large scale system, such as data communication between the zones are performed through a plurality of paths when a system composed of a plurality of zones are the design target, it caused excessive security measures must be implemented in methods focusing on the access points.

For example, a plurality of data communication types exists on a single network where data of various significance levels are exchanged in a system such as a smart grid where a plurality of field device types or data centers communicates data. When focusing on the access points, such as in the Patent Document, the "network" is extracted as the access point so that the threat toward the network and the requirement and measures therefor can be studied, however, a high level of security measures will be performed for all the field devices regardless of the significance level of the data handled since the same security measures are applied to all the paths on the network. As a result, security measures redundant than the actually required measures would be taken for communication paths for information of low significance which may lead to increase in cost.

Further, when existing technology is applied to a security design for large scale systems, the places where the security measures relating to data communication is taken is unclear with the methods focusing on the access points leading to a problem that requirements and measures may fail to be completely extracted.

For example, when data is communicated between two zones, measures need to be taken so that the two zones being the transmission source zone and the destination zone are paired for security measures for this communication data. Specifically, there is a need to mount an authentication function in the destination zone and an authenticated function in the transmission zone in order to meet the requirements of "authentication".

However, with the method focusing on the access points, for example, the security requirements of "authentication" can be extracted for the access points of the server but the requirement of "having a function of being authenticated" by the client accessing thereto would not be extracted and thus a requirement or measures may be missing.

Such requirements and measures failing from being extracted had a problem of being the cause of having to return the process in the system design work which in turn largely affects the subsequent design development process leading to a possible cost increase.

### SUMMARY

The present invention has been made for solving the above and other problems and an object thereof is to enable applicability of appropriate security measures taking into consideration the significance of the handled information in security design of a system, and to provide a system security design support device, a system security design support method and a system security design support program that can avoid security requirements to be set to the system from missing.

An aspect of the present invention for achieving the above objective is a system security design support device that supports requirement defining and measures planning in security design of a system, including
a requirement - measures information holding unit configured to
describe a design target system in a plurality of zones each being a security setting division,
classify the each zone into
   a path coupling between the zones in an information communicable manner,
   a zone boundary that is a coupling part between the path and the each zone, and
   an in-zone part,
associate and register
   security requirement information being information relating to a requirement in terms of security required by the design target system at the each in-zone, the each path, and the each zone boundary, and
   security measures information being information indicating measures, classified into measures intensity levels, to be taken to satisfy the security requirement,
a system configuration information holding unit configured to hold the measures intensity levels in association with the corresponding each in-zone part and the each zone boundary, as well as the each path in association with the measures intensity levels and with the measures intensity level of corresponding information communicating through the path, and
a requirement defining and measures planning processing unit configured to
   acquire from the system configuration information holding unit information of the in-zone part, the zone boundary, and the zone path that configure the design target system,
   specify information of the zone boundary of a transmission source and the zone boundary of a transmission destination, relating to the each path,
   apply the measures intensity level, to the transmission source zone boundary and the transmission destination zone boundary, associated to the path corresponding thereto, and
   output information including correlation of the information of the in-zone part, the zone boundary, and the zone path, and the measures intensity levels.

According to the above aspect of the present invention, appropriate security measures taking into consideration the significance of the handled information is made applicable and the security requirements to be set to the system can be avoided from missing, in the security design of a system.

### BRIEF DESCRIPTION OF THE DRAWINGS

For a more complete understanding of the present invention and the advantages thereof, reference is now made to the following description taken in conjunction with the accompanying drawings wherein:
Fig. 1 is a diagram illustrating a schematic configuration of the requirement defining and measures planning support device 10 of one embodiment of the present invention;
Fig. 2 is a diagram illustrating a software configuration example of the requirement defining and measures planning support device 10;
Fig. 3 is a hardware configuration example of the requirement defining and measures planning support device 10 shown in Fig. 2;
Fig. 4 is a diagram illustrating the configuration example of the requirement - measures DB 12;
Fig. 5 is a diagram illustrating a configuration example of the category table of applied types 50;
Fig. 6 is a schematic diagram for explaining the requirement correlation;
Fig. 7 is a flowchart illustrating an overall process flow of requirement extracting and measures planning by the requirement defining and measures planning support device 10;
Fig. 8 is a diagram illustrating a system configuration example of the design target to be analyzed by the requirement defining and measures planning support device 10;
Fig. 9 is a diagram illustrating a configuration example of a system configuration table 100;
Fig. 10 is a diagram illustrating a configuration example of a system configuration table 200;
Fig. 11 is a flowchart illustrating an in-zone and zone boundary function requirement and measures extraction flow in the requirement extracting and measures planning process of Fig. 7;
Fig. 12 is a flowchart illustrating a path function requirement and measures extraction process example in the requirement extracting and measures planning process of Fig. 7;
Fig. 13 is a flowchart illustrating a management requirement and measures extraction process example in the requirement extracting and measures planning process of Fig. 7;
Fig. 14 is a flowchart illustrating an environment requirement and measures extraction process example in the requirement extracting and measures planning process of Fig. 7;
Fig. 15 is a flowchart illustrating a correlation confirmation and requirement and measures adding process example in the requirement extracting and measures planning process of Fig. 7;
Fig. 16 is a diagram illustrating a configuration example of a function requirement and measures table 300 created as a result of the requirement extracting and measures planning process of Fig. 7;
Fig. 17 is a diagram illustrating a configuration example of a function requirement and measures table 400 created as a result of the requirement extracting and measures planning process of Fig. 7;
Fig. 18 is a diagram illustrating a configuration example of a function requirement and measures table 500 created as a result of the requirement extracting and measures planning process of Fig. 7;
Fig. 19 is a diagram illustrating a configuration example of a function requirement and measures table 600 created as a result of the requirement extracting and measures planning process of Fig. 7; and
Fig. 20 is a diagram illustrating a configuration example and an output screen image of table of requirement and measures list for each zone having listed for each zone, a function requirement and measures table 1, a function requirement and measures table 2, a management requirement and measures table, and an environment requirement and measures table.

### DETAILED DESCRIPTION

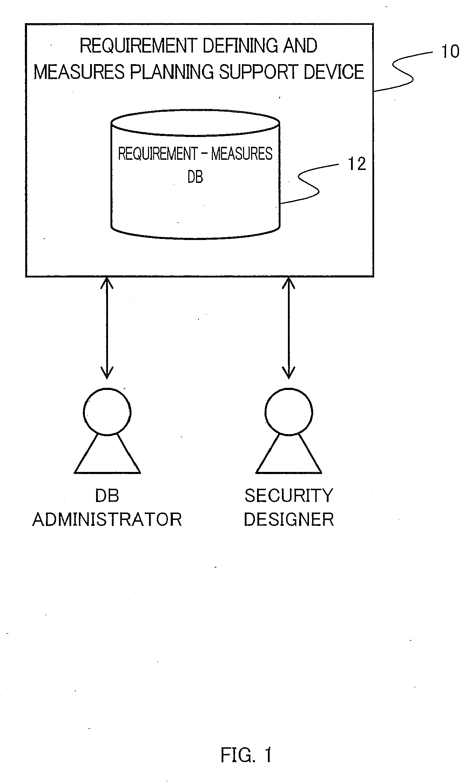

Description of one embodiment of the present invention will be given in the following. Firstly, a configuration of the present embodiment will be described with reference to Fig. 1. Fig. 1 is a diagram exemplifying the configuration of the requirement defining and measures planning support device 10 (system security design support device) according to the present embodiment. The requirement defining and measures planning support device 10 of the present embodiment holds a requirement - measures DB 12. The requirement - measures DB 12 is configured and managed by the database administrator. The security designer defines requirements and plans measures of the target system using the requirement defining and measures planning support device 10. Note that, the term "database" will be abbreviated as "DB" in the following description.

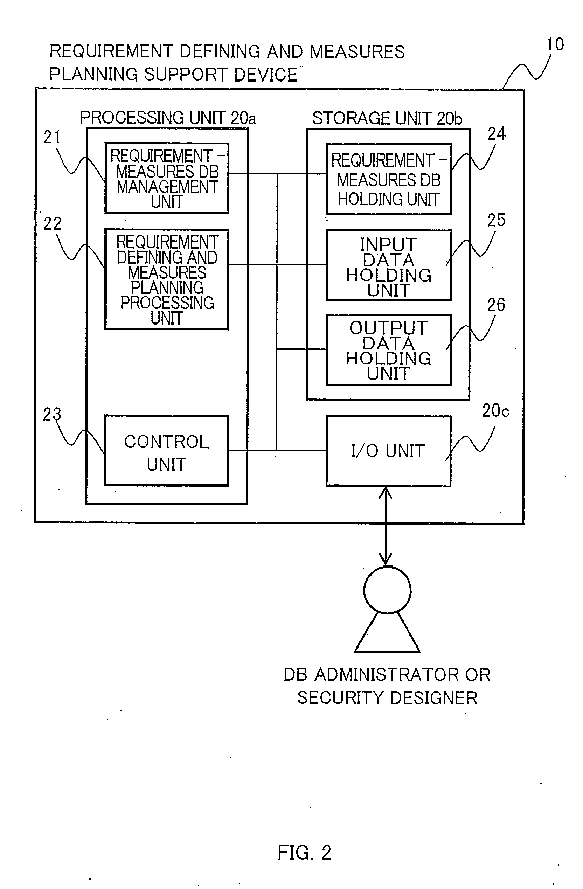

Next, a description of the requirement defining and measures planning support device 10 of Fig. 1 will be given with reference to Fig. 2. Fig. 2 is a diagram illustrating a software configuration example of the requirement defining and measures planning support device 10.

The requirement defining and measures planning support device 10 includes a processing unit 20a, a storage unit 20b, and an I/O unit 20c which performs such as reception of instructions and data from the DB administrator and the security designer.

The processing unit 20a includes a requirement - measures DB management unit 21 for managing configuration, adding, deleting and the like of the requirement - measures DB 12 based on instructions form the DB administrator, a requirement defining and measures planning processing unit 22 for extracting requirements and measures based on the information input by the security designer and data in the requirement - measures DB 12, and a control unit 23 for performing centralized control of each unit in the requirement defining and measures planning support device 10.

The storage unit 20b has provided thereto a requirement - measures DB holding unit 24 which is a storage area for holding the requirement - measures DB 12, an input data holding unit 25 which is a storage area for holding data input through the I/O unit 20c, and an output data holding unit 26 which is a storage area for holding data output through the I/O unit 20c.

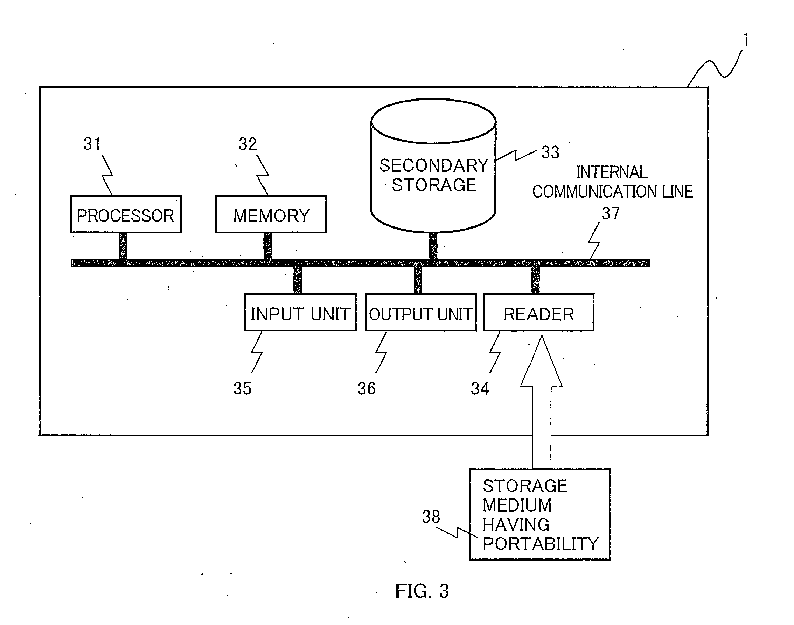

The requirement defining and measures planning support device 10 illustrated in Fig. 2 can be realized by, for example, a hardware configuration shown in Fig. 3. The requirement defining and measures planning support device 10 can be constructed on a common computer provided with a processor 31 including a calculation device such as a Central Processing Unit (CPU), a memory 32 including a storage device such as a Random Access Memory (RAM) and a flash memory, a secondary storage device 33 including a storage device such as a hard disk drive (HDD), a semiconductor drive, a reader 34 for reading information from the storage medium 38 which is portable such as various optical disks, a Universal Serial Bus (USB), a memory, an input device 35 such as a keyboard and a mouse, an output device 36 such as a display monitor and a printer, and an internal communication line 37 which is a data transmitting path between each of these devices.

Each of the functions of the aforementioned processing unit 20a can be realized as processes performed by the processor 31 by the processor 31 implementing a predetermined program loaded on the memory 32 from the secondary storage device 33. The I/O unit 20c is implemented by the processor 31 utilizing the input device 35, output device 36 or the reader 34. And the storage unit 20b is realized as a logical storage area provided by the memory 32 or the secondary storage device 33.

The above predetermined program may be stored in the secondary storage device 33 in advance, or may be stored in a storage medium 38 usable by the above computer and read via the reader 34 according to need to be introduced into the secondary storage device 33. Further the requirement defining and measures planning support device 10 may be communicably coupled to another external device via an appropriate network.

Next, description of the operations performed by the requirement defining and measures planning support device 10 with the above configuration will be given. A requirement - measures DB 12 is constructed as a precondition for the operation of the requirement defining and measures planning support device 10 according to the present embodiment. The requirement defining and measures planning support device 10 executes the requirement extracting and measures planning step using the constructed requirement - measures DB 12.

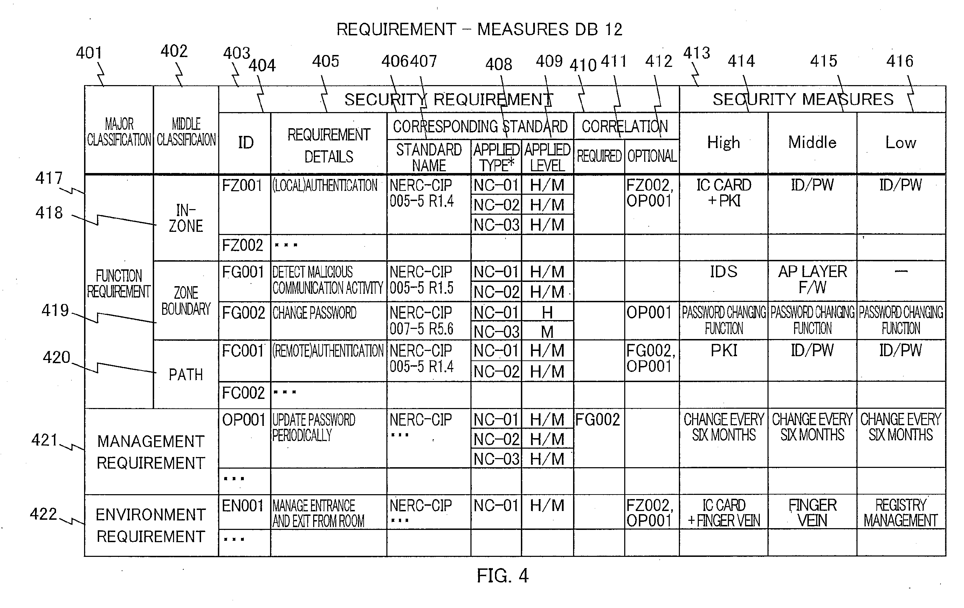

Firstly, description of the requirement - measures database construction will be given. Fig. 4 is a table illustrating a configuration example of the requirement - measures DB 12. The requirement - measures DB 12 is basic data used by the requirement defining and measures planning support device 10 and is stored by the DB administrator inputting data in the requirement - measures DB holding unit 24 in advance. Security requirement 403 and security measures 413 corresponding thereto are included in each record of the requirement - measures DB 12. Note that, the contents of each field recorded in the requirement - measures DB 12 of Fig. 4 are illustrative examples and are not intended to limit the invention of the present embodiment in any way. This holds true for the other DBs and tables that follow.

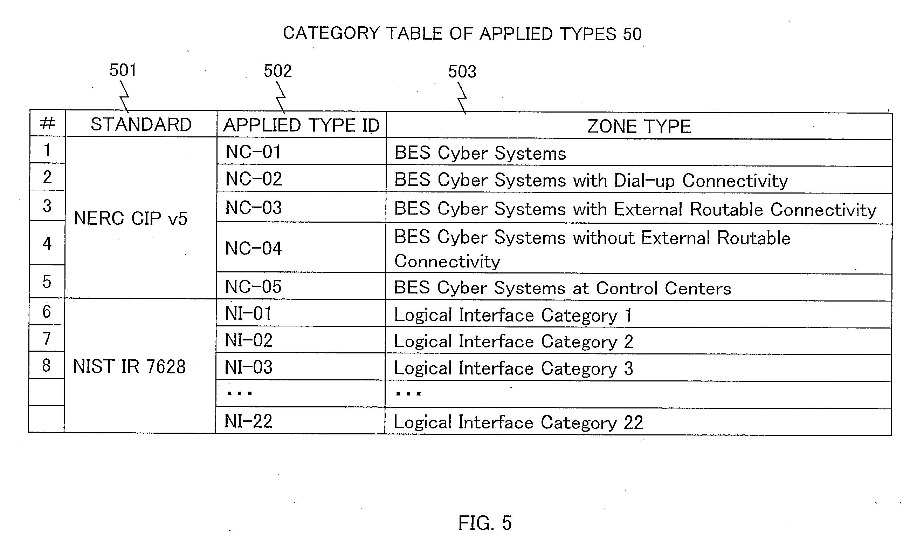

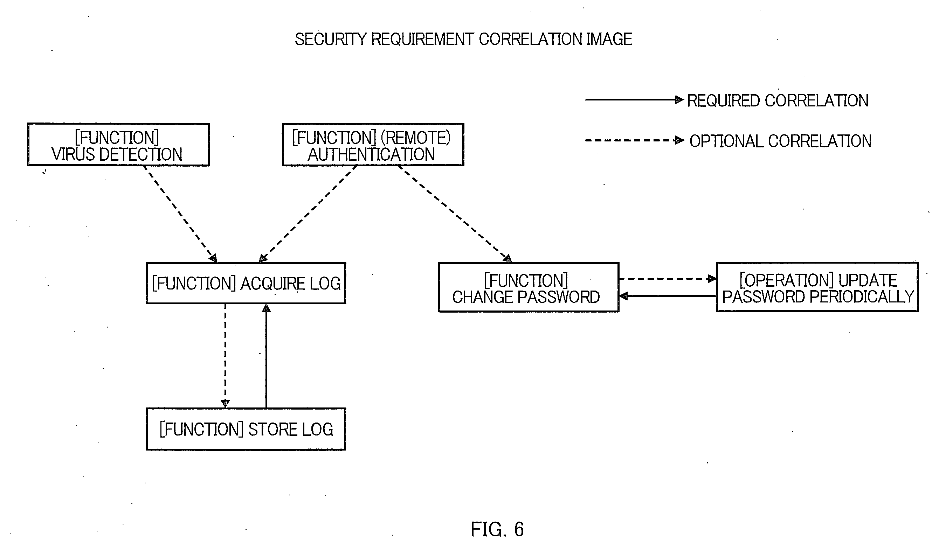

The security requirement 403 means a function required for ensuring security of the target system and is configured to include each items of -a requirement ID 404 which is an identifier of the requirement, requirement details 405, a corresponding standard 406 which indicates the standard needed by the requirement, and a correlation 410 which indicates which other requirement the requirement holds a correlation with. The corresponding standard 406 is configured of a standard name 407 which is an identifier of the standard, an applied type 408 which indicates which zone type the requirement is needed in, and applied level 409 which indicates which zone level the requirement is needed. The categories of the applied type 408 are shown in the later described category table of applied types 50 of Fig. 5. The correlation 410 is configured to include a required 411 field indicating that another requirement needs to be is unfailingly satisfied for satisfying this requirement, and an optional 412 field indicating that another requirement is recommended to be satisfied for satisfying this requirement. An image of a correlation will be described later with reference to Fig. 6.

The DB administrator inputs the requirement details 405 and the corresponding standard 406 based on the information of the standard to be applied to the target system. Further, the DB administrator inputs to the correlation 410 the results of the studies made by the DB administrator on the correlation.

The security measures 413 field has described therein which level of measure is required as the measure for satisfying the corresponding security requirement 403, divided into three levels being High 414, Middle 415 and Low 416. The result of the studies made by the DB administrator is input in the security measures 413.

As shown in Fig. 4, each record in the requirement - measures DB 12 are registered divided into three major classifications being the function requirement 417, management requirement 421 and the environment requirement 422. The function requirement 417 has arranged therein requirements which need to be supported in terms of systems such as on function development, product purchasing and the like.- The management requirement 421 has arranged therein requirements which need to be supported in terms of operation and management such as on works by the operator, preparation of a procedure manual and the like. The environment requirement 422 has arranged therein requirements which need to be supported in terms of environment such as on the arrangement environment of data center equipment and field devices. Note that among the above three major classifications, a requirement relating to a plurality of classifications is arranged in the plurality of the classifications.

The function requirement 417 is further classified into three middle zones being in-zone 418, zone boundary 419 and path 420. The in-zone 418 has arranged therein requirements that need measures against internal attacks such as internal fraud. The zone boundary 419 has arranged therein requirements that need measures against attacks from outside such as target-type attacks. The path 420 has arranged therein requirements that need paired measures for two zones when information is communicated between the two zones. Note that, among the above three middle classifications, a requirement relating to a plurality of classifications is arranged in the plurality of the classifications. The zone boundary 419 can be situated as a connecting part between one zone and a path 420 coupled thereto.

The DB administrator studies on where to place each requirement listed in the standard among the major classifications 401 and the middle classifications 402, and then inputs the studied result.

Fig. 5 is a diagram illustrating a configuration example of the category table 50 indicating the categories of the applied types 408. The category table 50 of the present applied type is configured to include a standard 501, an applied typed ID 502 being an identifier of the applied type, and a zone type 503 indicating the category of the applied type. The DB administrator creates the present table based on information of the standards in advance. Each record shown in Fig. 5 are examples relating to the security standards provided in NERC, NIST and the like.

Description of the correlations among the requirements will follow. Fig. 6 is a diagram illustrating an image of the meanings held by the correlation 410 recorded in the requirement - measures DB 12. Each element indicated in the squares in Fig. 6 indicate a requirement and the arrows that connect the elements indicate that there is a correlation between the elements. A solid line arrow indicates a required correlation and a dashed line arrow indicates an optional correlation. For example, the dashed line arrow from "[FUNCTION] (REMOTE) AUTHENTICATION" to "[FUNCTION] CHANGE PASSWORD" means that changing of the password is recommended to be applied simultaneously when performing authentication. Further, the solid line arrow from "[OPERATION] UPDATE PASSWORD PERIODICALLY" to "[FUNCTION] CHANGE PASSWORD" means that changing of the password is prerequisite when performing operation of updating the password periodically.

The construction of the above requirement - measures DB 12 needs to be performed basically only once when the DB administrator constructs the requirement defining and measures planning support device 10, via the requirement - measures DB 12 provided to the processing unit 20a of the requirement defining and measures planning support device 10. When there is a change to the content of the standard or when adding information of a new standard to the requirement - measures DB 12 once after constructing the requirement - measures DB 12, the DB administrator is to perform the same process of the above requirement - measures DB 12 construction.

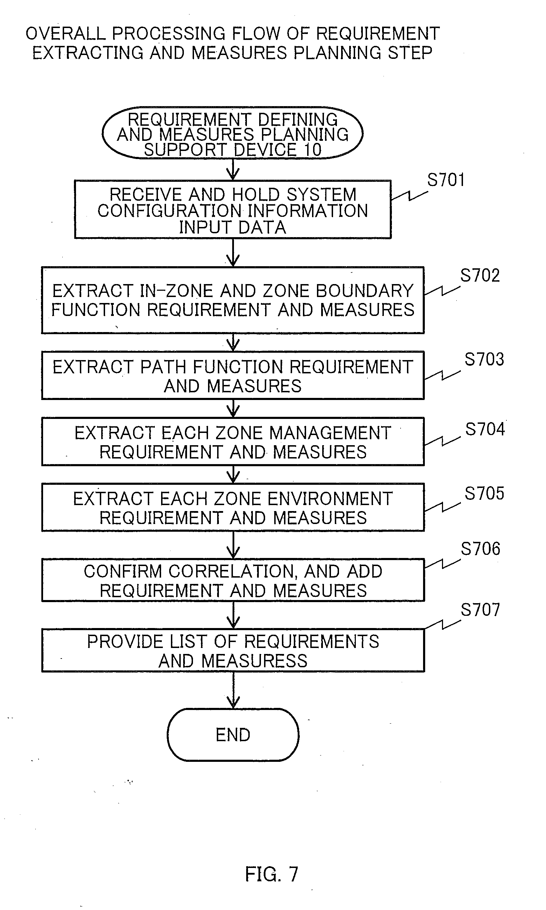

Description of the requirement extracting and measures planning process implemented by the requirement defining and measures planning support device 10 will be given next. Fig. 7 is a flowchart illustrating an overall processing example of requirement extracting and measures planning.

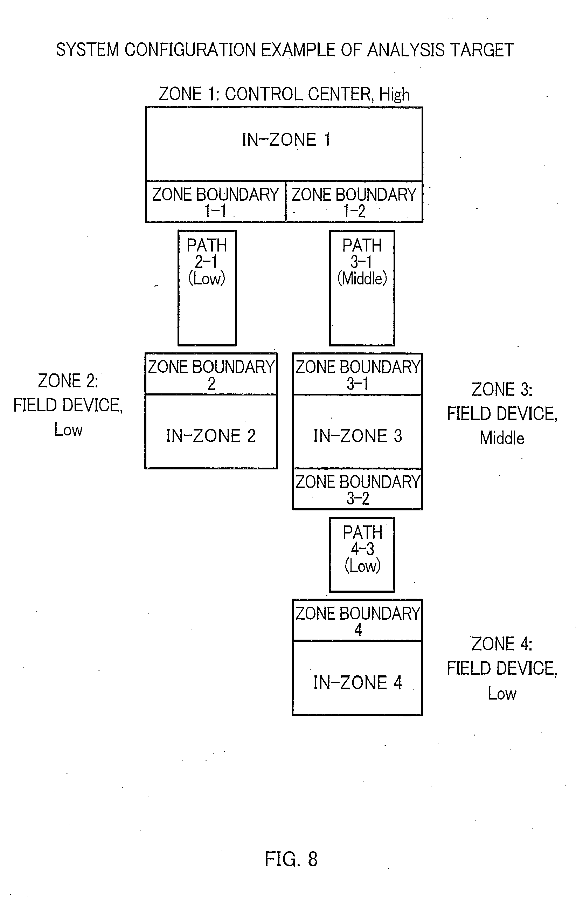

Firstly, the security designer creates the system configuration information on the system as the design target at a prior stage when the requirement defining and measures planning support device 10 executes the requirement extracting and measures planning process. An example of the method of creating the system configuration information will be described with reference to Figs. 8 to 10.

Fig. 8 is a diagram illustrating a system configuration example of the design target. The target system in this present example is configured of four zones being zone 1 to zone 4. Zone 1 is the control center of High significance, zones 2 and 4 are the field devices of Low significance, and zone 3 is the field device of Middle significance. Data communication is performed between each zone of zones 1 and 2, zones 1 and 3, and zones 3 and 4, and each of them is named path 2-1, path 3-1 and path 4-3. Information communicated on each path by data communication has set their significance to Low, Middle and Low, respectively.

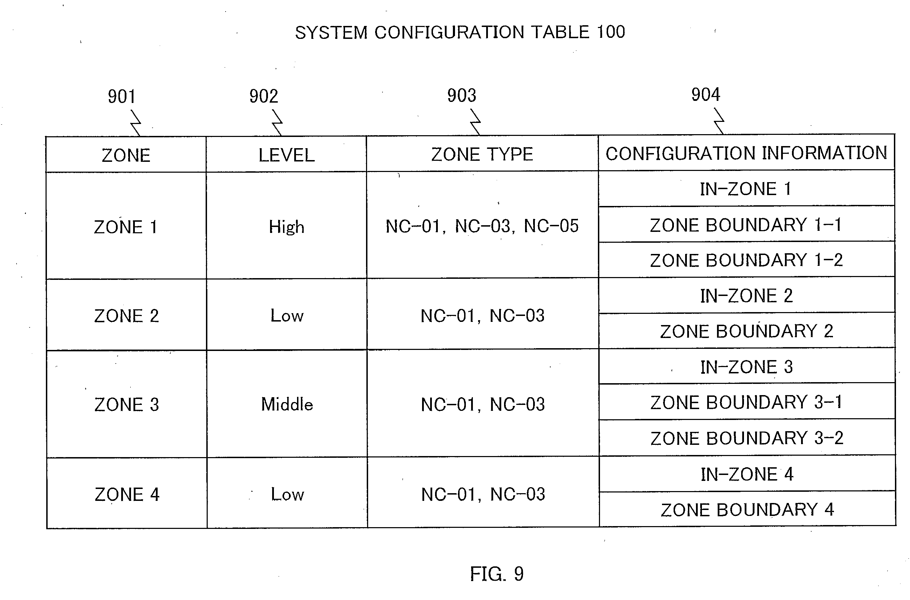

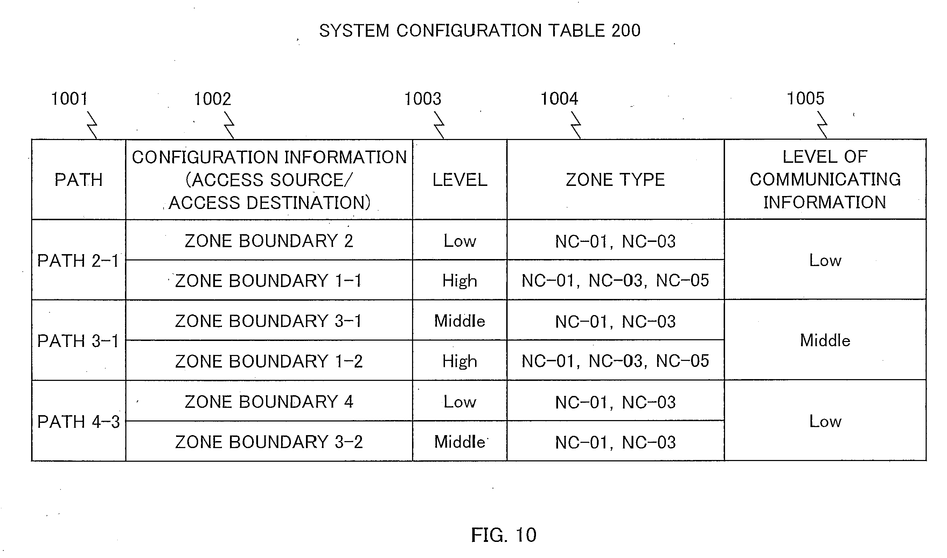

The security designer creates the system configuration information based on information of such a design target system. The system configuration information is configured to include the system configuration table 100 of Fig. 9 and system configuration table 200 of Fig. 10.

The system configuration table 100 indicates attributes in terms of security of each zone included in the system, and is configured to include each items of zone 901 being an identifier of each zone, level 902 indicating the significance of the zone, zone type 903 indicating the type of the zone, and configuration information 904 indicating what in-zone and zone boundary the zone is configured of. The security designer inputs each items of the zone 901, level 902, and configuration information 904 based on information in Fig. 8. Further, the applied type ID 502 of the zone type that applies to the type of each zone is input to the zone type 903 of the system configuration table 100 based on the information in Fig. 8 and the category table of applied types 50 in Fig. 5.

The system configuration table 200 indicates information relating to data communication paths included in the system and is configured to include each items of path 1001, configuration information 1002 of the access source and access destination, level 1003 indicating the significance of the zone in which the configuration information 1002 is included, the zone type 1004 indicating type of zone in which the configuration information 1002 is included, and level 1005 of the information communicating through the path. The security designer inputs into the system configuration table 200 based on information in Fig. 8, the path 1001, the configuration information 1002 of the access source and the access destination, and the level 1005 of the communicating information. Further the level 1003 and the zone type 1004 in the system configuration table 200 also has input information associated with the system configuration table 100. For example, when the configuration information- 1002 of the access source is "ZONE BOUNDARY 2", "ZONE BOUNDARY 2" is searched for from the configuration information 904 of the system configuration table 100 and the level 902 and the zone type 903 of the corresponding record are input to the level 1003 and the zone type 1004 of the system configuration table 200.

The security designer creates the system configuration tables 100 and 200 by performing the above process, and hereby the security measures level and the like are organized for each zone included in the system.

After completing preparation up to this point, the security designer inputs input information to the requirement defining and measures planning support device 10 and requests for the requirement defining and measures planning process. The data to be input are the contents in the system configuration tables 100 and 200 that has already been created.

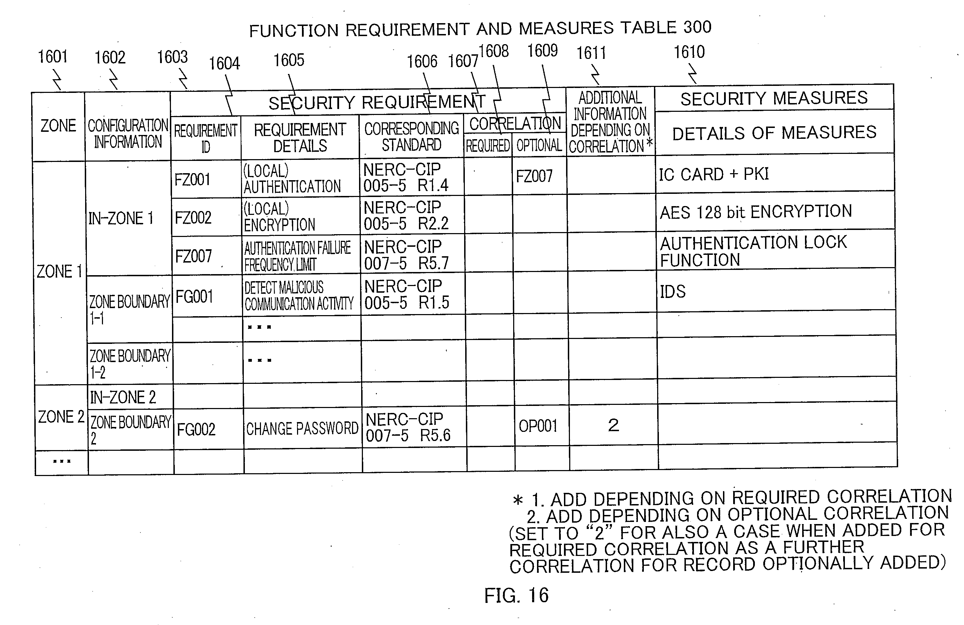

Description of the requirement defining and measures planning process by the requirement defining and measures planning support device 10 will be described in the following with reference to Fig. 7. The requirement defining and measures planning process is executed by the requirement defining and measures planning process unit 22 of the requirement defining and measures planning support device 10 as the main operating body, however, the requirement defining and measures planning process unit 22 will be abbreviated as "device 10" in the following in order to avoid complication. First, the device 10 receives as input data information recorded in the system configuration tables 100 and 200 as input information to be held in the input data holding unit 25 (S701). Based on this, the device 10 extracts from the requirement-measures DB 12 the security requirements to be dealt with in each zone of the system and the measures corresponding thereto. Specifically, the device 10 performs the function requirement and measures extracting process relating to the in-zone and zone boundary (S702), function requirement and measures extracting process relating to the path (S703), management requirement and measures extracting process for each zone (S704), and environment requirement and measures extracting process for each zone (S705) and correlation confirming, and requirement and measures adding process (S706). Then as a result of these processes, the device 10 creates and provides the requirement and measures tables exemplified in Figs. 16 to 19 and ends the process (S707).

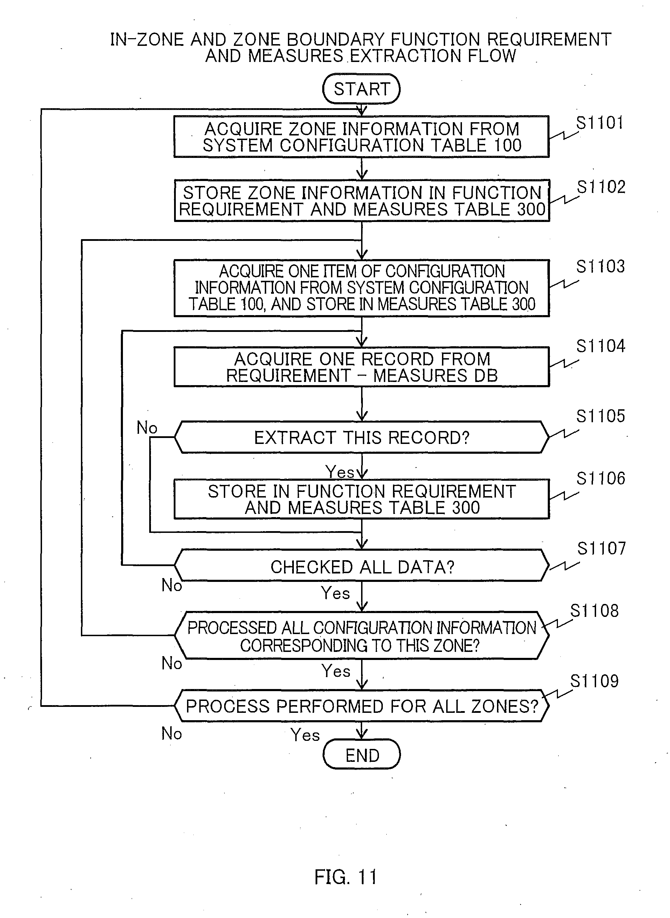

Next, description of specific process flow examples of each of the processes S702 to S706 of Fig. 7 will be given with reference to the flowcharts illustrated in Figs. 11 to 15, respectively.

Firstly, the in-zone and zone boundary function requirement and measures extracting process will be described. Fig. 11 is a flowchart illustrating an in-zone and zone boundary function requirement and measures extraction process example of S702 in Fig. 7. First, the device 10 acquires the zone 901, the level 902, and the zone type 903 being zone information from the first record in the system configuration table 100 (S1101). Specifically, the device 10 refers to Fig. 9 and acquires the values of "ZONE 1", "High", and "NC-01, NC-03, NC-05". The device then stores information of zone 901, among the acquired information, in the function requirement and measures table 300 shown in Fig. 16 (S1102). Specifically, the device 10 stores "ZONE 1" into the zone 1601 of the function requirement and measures table 300 of Fig. 16. The function requirement and measures table 300 of Fig. 16 is prepared in advance in, for example, an output data holding unit 26, at the time of constructing the device 10.

Then the device 10 acquires one item of the configuration information 904 corresponding to the current zone (zone 1) from the system configuration table 100 to store in the configuration information 1602 of the function requirement and measures table 300 (S1103). Specifically, the device 10 stores "IN-ZONE 1" in the configuration information 1602 of the function requirement and measures table 300.

Then the device 10 acquires one record whose major classification 401 in the requirement - measures DB 12 is "FUNCTION REQUIREMENT" and the middle classification 402 is of the same classification as that of the configuration information 904 acquired at S1103 (S1104). Specifically, the device 10 acquires one row of a record specified by the requirement ID "FZ001" being the first record of the records whose major classification 401 is "FUNCTION REQUIREMENT" and the middle classification 402 is "IN-ZONE".

Then the device 10 determines whether or not to extract the record acquired at S1104 as the zone requirement and measures (S1105). Determination on whether to extract or not is made by checking whether the conditions of (1) any one of the zone type 903 acquired at S1101 is included in the applied type 408 of the record acquired at S1104, and (2) level 902 acquired at S1101 is included in the applied level 409 of the record acquired at S1104, are satisfied. Specifically, the device 10 determines that the requirement is to be extracted since "High" and "NC-01, NC-03" acquired at S1101 are included in the requirement specified with the requirement ID "FZ001". The requirement is determined not to be extracted when the above AND condition is not satisfied.

When the record is determined to be extracted at S1105, the device 10 stores this record into the function requirement and measures table 300 (S1106). Specifically, the device 10 stores information of the security requirement 403 among the records acquired at S1104 into the security requirement 1603 of the function requirement and measures table 300. Further, with regard to the security requirement 403 field among the records acquired at S1104, measures listed in the same level ("High" in the present example) as the level 902 acquired at S1101 is stored in the security measures 1610 of the function requirement and measures table 300.

The device 10 performs the above processes S1104 to S1106 for all the target records of the requirement - measures DB 12 and extracts the requirement and measures required by each configuration element of the- concerned zone. Note that, the target record is a record whose major classification 401 is "FUNCTION REQUIREMENT" and the middle classification 402 is the same classification as that of the configuration information 904 acquired at S1103, in the requirement - measures DB 12.

When determining that checking for all the target records has been completed (S1107: YES), the device 10 checks the system configuration table 100 on whether a configuration information corresponding to the concerned zone is remaining (S1108). When determining that unprocessed configuration information is remaining (S1108: NO), the device 10 returns to S1103 and acquires the next configuration information 904.

When determining that the process for all the configuration information 904 corresponding to the concerned zone has been completed (S1108: YES), the device 10 checks the system configuration table 100 on whether or not the next zone 901 still remains (S1109). When determining that an unprocessed zone exists (S1109: NO), the device 10 returns to S1101 and acquires the next zone 901. When determining that the processes for all the zones have been completed (S1109: YES), the device 10 ends the function requirement and measures extracting process for the in-zone and zone boundary. And with the above processes, security requirements and measures for each zone defined in the requirement - measures DB 12 are completely extracted.

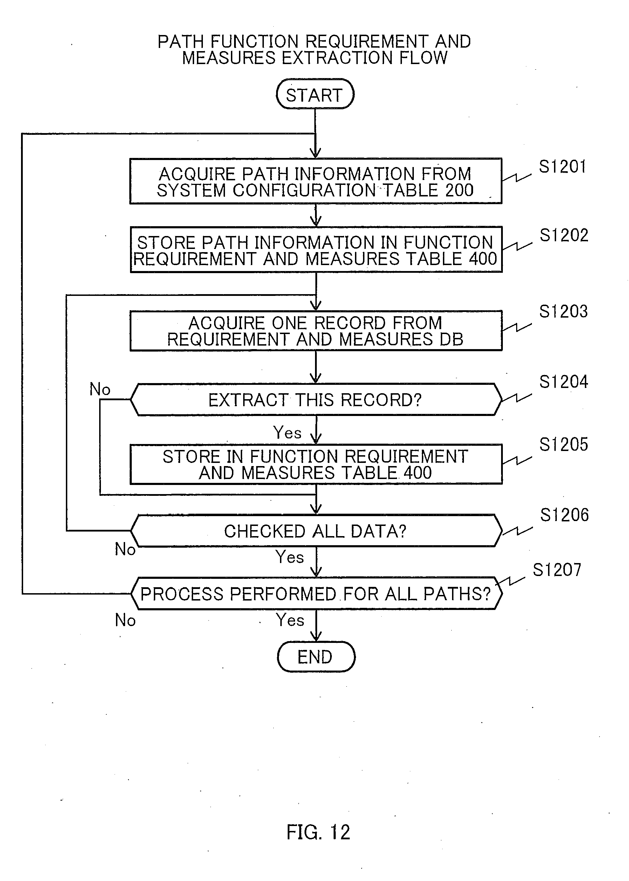

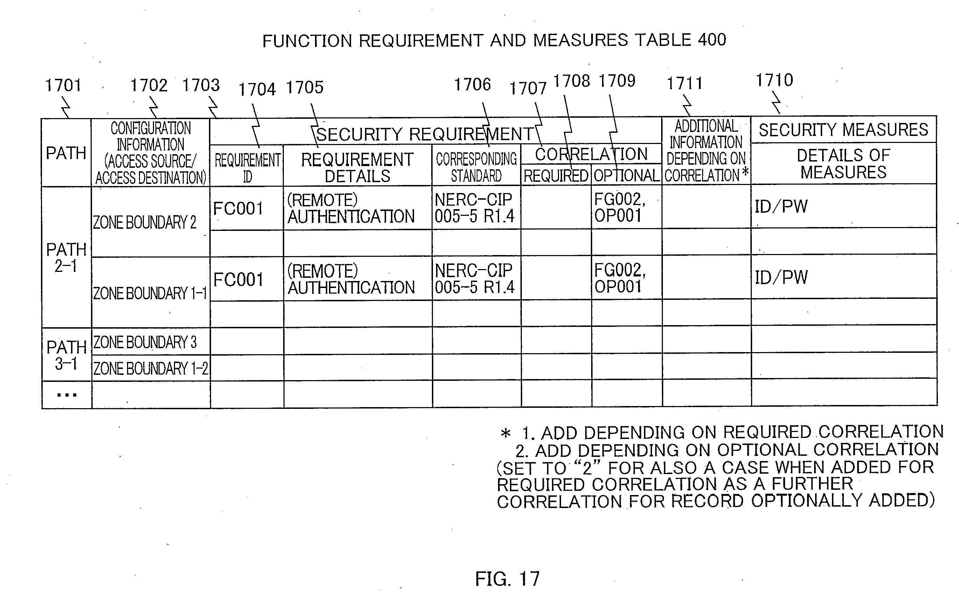

Next, description of the function requirement and measures extracting process relating to the path which is a process of S703 of the entire process flow in Fig. 7 will be given. Fig. 12 is a flowchart illustrating a process example of a path function requirement and measures extraction. Firstly, the device 10 acquires the path 1001 being information of the path, the access source configuration information 1002, the access destination configuration information 1002, the level 1003 of the access destination configuration information, the zone type 1004 of the access destination configuration information and the level 1005 of the communicated information from the record of the first path of the system configuration table 200 (S1201). Specifically, in the example shown in Fig. 10, the values of "PATH 2-1", "ZONE BOUNDARY 2", "ZONE BOUNDARY 1-1", "Low", "High", "NC-01, NC-03, NC-05", and "Low" are acquired. The information of the path 1001, the access source configuration information 1002 and the access destination configuration information 1002 among the acquired information are stored in the function requirement and measures table 400 shown in Fig. 17 (S1202). Specifically, "PATH 2-1" is stored in the path 1702 and "ZONE BOUNDARY 2" and "ZONE BOUNDARY 1-1" are stored in the configuration information (access source / access destination) 1702 of the function requirement and measures table 400. The function requirement and measures table 400 of Fig. 17 is prepared in advance in, for example, the output data holding unit 26 when configuring the device 10.

Next, the device 10 acquires one record for a record whose major classification 401 is "FUNCTION REQUIREMENT" and middle classification 402 is "PATH" in the requirement - measures DB 12 in Fig. 4 (S1203). Specifically, one line of a record specified by the requirement ID "FC001" being the first record of the records classified as "FUNCTIN REQUIREMENT" for the major classification 401 and "PATH" for the middle classification 402 is acquired.

Here the device 10 determines on whether or not to extract the record acquired at S1203 as the requirement and measures of the concerned path (S1204). The determination on whether to extract or not is performed by checking whether the conditions of (1) any one of the zone types 903 of the access destination configuration element acquired at S1201 is included in the applied type 408 of the record acquired at S1203, and (2) the level 902 of the access destination configuration, information acquired at S1201 is included in the applied level 409 of the record acquired at S1203, are satisfied. Specifically, with the example shown in Fig. 4, the requirement with the requirement ID of "FC001" is determined to be a requirement to be extracted since "High" (applied level 409 has "H/M", that is, "High or Middle" recorded thereto) and "NC-01" acquired at S1201 are included. The requirement is not determined to be extracted when one of the above conditions is not satisfied.

When the record is determined to be extracted at S1204 (S1204: YES), the device 10 stores the record into the function requirement and measures table 400 (S1205). Specifically, information of the security requirement 403 of the records acquired at S1203 is stored in the security requirement 1703 of the function requirement and measures table 400. At this time, information of the security requirement 403 is stored for both records of "ZONE BOUNDARY 2" being the access source configuration information 1702 and "ZONE BOUNDARY 1-1" being the access destination configuration information 1702.

Further for the field of the security measures 413 among the records acquired at S1203, the measures described in the same level ("Low" in the present example) as the level 1005 of the communicated information acquired at S1201 are stored in the security measures 1710 of the function requirement and measures table 400. When the record concerned is determined not to be extracted (S1204: No), the device 10 advances the process to S1206.

The device 10 performs the above processes S1203 to S1205 for all the target records of the requirement - measures DB 12 and extracts the requirement and measures required by the path (return to S1203 when S1206: NO). Note that, the target record is the record whose major classification 401 is "FUNCTION REQUIREMENT" and the middle classification 402 is "PATH" of the requirement - measures DB 12.

When determining that checking has been completed for all the target records (S1206: YES), the device 10 checks the system configuration table 200 on whether the data of path 1001 still remains (S1207). When determining that an unprocessed path 1001 still remains (S1207: NO), the device 10 returns to S1201 and acquires the next path 1001. When determining that the process for all the paths have been completed (S1207: YES), the device 10 ends the path function requirement and measures extracting process. With the above process, the security requirement and measures for each path defined in the requirement - measures DB 12 are completely extracted.

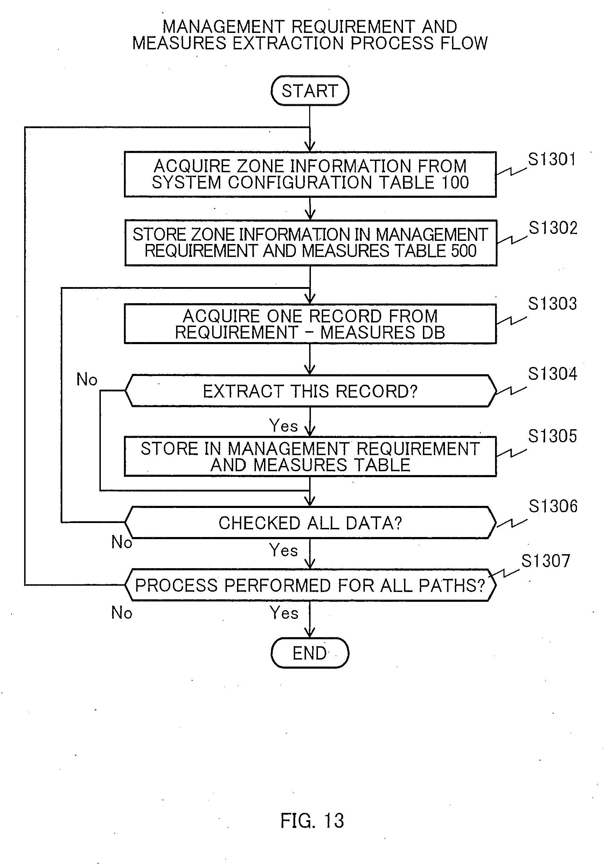

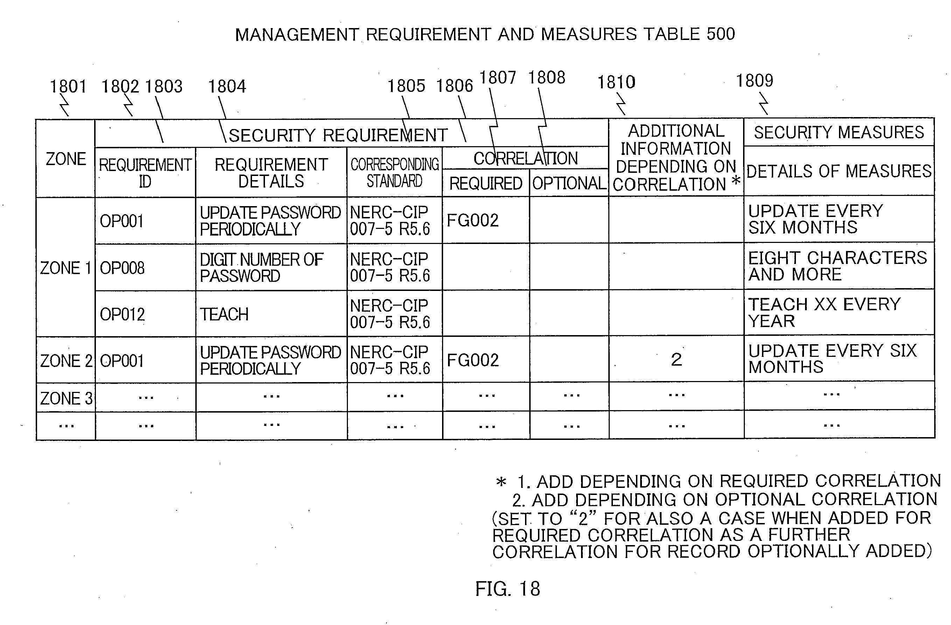

Next, description of the management requirement and measures extracting process which is a process in S704 of the entire process flow in Fig. 7 will be given. Fig. 13 is a flowchart illustrating an example of a management requirement and measures extraction process example. When the present process is started, the device 10 first acquires from the system configuration table 100, zone 901 which is information of the zone, the level 902, and the zone type 903 (S1301). Specifically, the device 10 refers to Fig. 9 and acquires the values of "ZONE 1", "High", and "NC-01, NC-03, NC-05". And information of zone 901 of the acquired information is stored in the management requirement and measures table 500 shown in Fig. 18 (S1302). Specifically, "ZONE 1" is stored in the zone 1801 field of the management requirement and measures table 500. The management requirement and measures table 500 of Fig. 18 is prepared in advance in, for example, the output data holding unit 26 when configuring the device 10.

Then the device 10 acquires one record for the record whose major classification 401 of the requirement - measures DB 12 is "MANAGEMENT REQUIREMENT" (S1303). Specifically, the device 10 acquires one row of a record specified by the requirement ID of "OP001" being the first record of the records whose major classification 401 is classified as "MANAGEMENT REQUIREMENT".

The device 10 determines whether the record acquired at S1303 is to be extracted as the requirement and measures of the zone concerned (S1304). Determination on whether or not to extract is made by checking whether the conditions of (1) any one of the zone type 903 acquired at S1301 is included in the applied type 408 of the record acquired at S1303, and (2) level 902 of the zone acquired at S1301 is included in the applied level 409 of the record acquired at S1303, are satisfied. Specifically, the device 10 determines that the requirement is to be extracted since "High" and "NC-01, NC-03" acquired at S1301 are included in the requirement with the requirement ID "OP001". The requirement is determined not to be extracted when one of the above conditions is not satisfied.

When the record is determined to be extracted at S1304 (S1304: YES), the device 10 stores the record in the management requirement and measures table 500 (S1305). Specifically, the device 10 stores information of the security requirement 403 of the records acquired at S1303 in the security requirement 1802 of the management requirement and measures table 500.

Further, for the security measures 413 field of the records acquired at S1303, the device 10 stores the measures described in the same level ("High" in the present example) as the level 902 acquired at S1301 in the security measures 1809 of the management requirement and measures table 500.

The device 10 determines whether the checking of the target records in the requirement - measures DB 12 at S1306 has been completed, and when determining that the checking has not been completed (S1306: NO), performs the above processes S1303 to S1305 for all the target records in the requirement - measures DB 12 and extracts the requirement and measures required to the concerned zone. Note that, the target record is a record whose major classification 401 in the requirement - measures DB 12 is "MANAGEMENT REQUIREMENT".

When determining that checking has been completed for all the target records (S1306: YES), the device 10 checks the system configuration table 100 on whether there is a data in the zone 901 still remaining (S1307). When determining that an unprocessed zone 901 remains (S1307: NO), the device 10 returns the process to S1301 and acquires the next zone 901. When determining that the process for all the zones 901 have been completed (S1307: YES), the device 10 ends the management requirement and measures extracting process. With the above process, the security requirement and measures for the management requirement defined in the requirement - measures DB 12 are completely extracted.

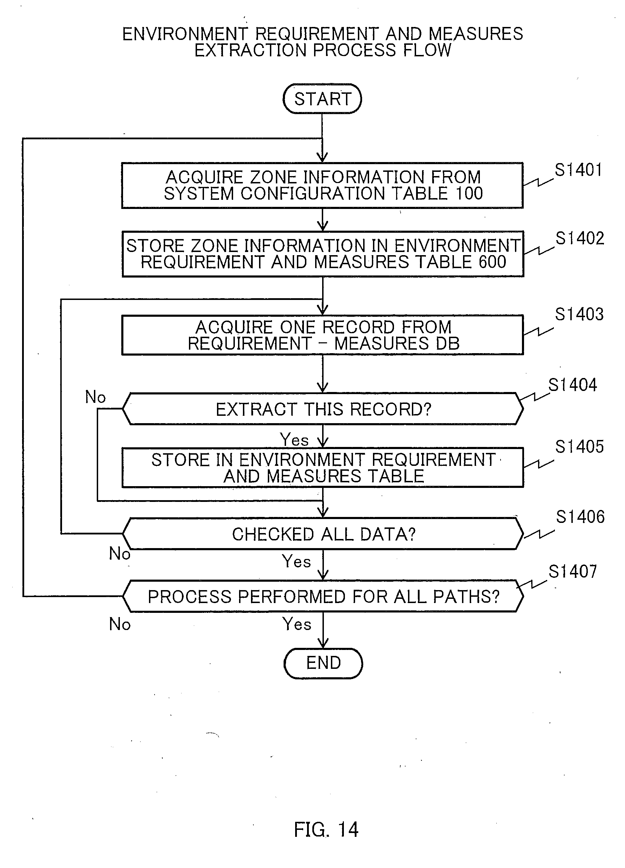

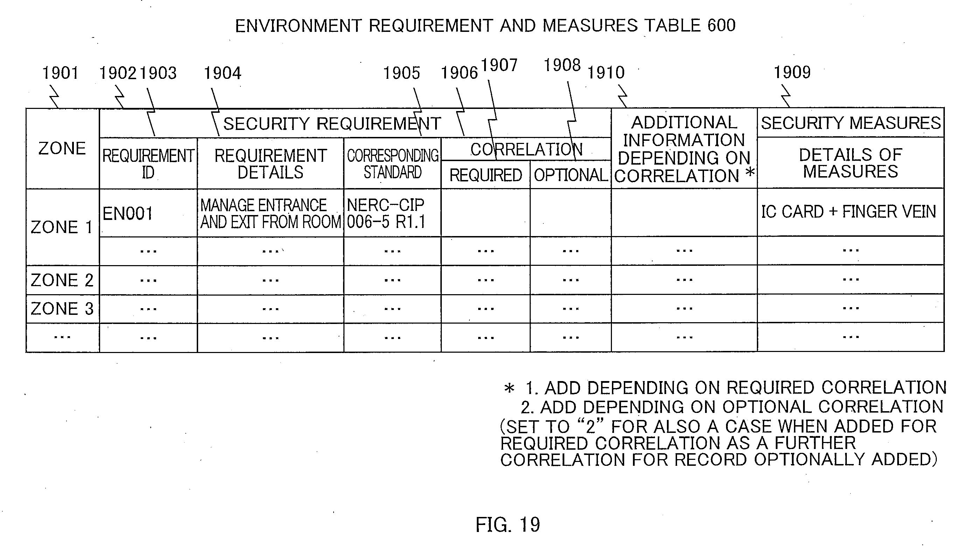

Description of the environment requirement and measures extracting process which is the process of S705 shown in Fig. 7 will be given next. Fig. 14 is a flowchart illustrating an environment requirement and measures extraction process example. When the process is started, the device 10 firstly acquires from the system configuration table 100, zone 901 which is information of the zone, the level 902 and the zone type 903 (S1401). Specifically, the device 10 refers to Fig. 9 and acquires the values of "ZONE 1", "High", and "NC-01, NC-03, NC-05". And information of zone 901 of the acquired information is stored in the environment requirement and measures table 600 shown in Fig. 19 (S1402). Specifically, the device 10 stores "ZONE 1" in the zone 1901 field of the environment requirement and measures table 600. The environment requirement and measures table 600 of Fig. 19 is prepared in advance in, for example, the output data holding unit 26 when configuring the device 10.

Next, the device 10 acquires one record for the record whose major classification 401 of the requirement - measures DB 12 is "ENVIRONMENT REQUIREMENT" (S1403). Specifically, the device 10 acquires one row of a record specified by the requirement ID of "EN001" being the first record of the records whose major classification 401 is classified as "ENVIRONMENT REQUIREMENT".

The device 10 determines whether the record acquired at S1403 is to be extracted as the requirement and measures of the zone concerned (S1404). Determination on whether or not to extract is made by checking whether the conditions of (1) any one of the zone type 903 acquired at S1401 is included in the applied type 408 of the record acquired at S1403, and (2) level 902 of the zone acquired at S1401 is included in the applied level 409 of the record acquired at S1403, are satisfied. Specifically, referring to Fig. 4, the device 10 determines that the requirement is to be extracted since "High" and "NC-01" acquired at S1401 are included in the record with the requirement ID "EN001". The requirement is determined not to be extracted when one of the conditions is not satisfied.

When the record is determined to be extracted at S1404 (S1404: YES), the device 10 stores the record in the environment requirement and measures table 600 (S1405). Specifically, the device 10 stores information of the security requirement 403 of the records acquired at S1403 in the security requirement 1902 of the environment requirement and measures table 600.

Further, for the security measures 413 field of the records acquired at S1403, the device 10 stores the measures described in the same level ("High" in the present example) as the level 902 acquired at S1401 in the security measures 1909 of the environment requirement and measures table 600.

The device 10 determines whether the checking of the target records in the requirement - measures DB 12 at S1406 has been completed, and when determining that the checking has not been completed (S1406: NO), performs the above processes S1403 to S1405 for all the target records in the requirement - measures DB 12 and extracts (step S1406) the requirement and measures required to the concerned zone. Note that, the target record is a record whose 'major classification 401 in the requirement - measures DB 12 is "ENVIRONMENT REQUIREMENT".

When determining that checking has been completed for all the target records (S1406: YES), the device 10 refers' to the system configuration table 100 and checks whether there is a data of the zone 901 still remaining (S1407). When determining that an unprocessed zone 901 remains (S1407: NO), the device 10 returns the process to S1401 and acquires the next zone 901. When determining that the process for all the zones 901 have been completed (S1407: YES), the device 10 ends the environment requirement and measures extracting process. With the above process, the security requirement and measures for the environment requirement defined in the requirement - measures DB 12 are completely extracted.

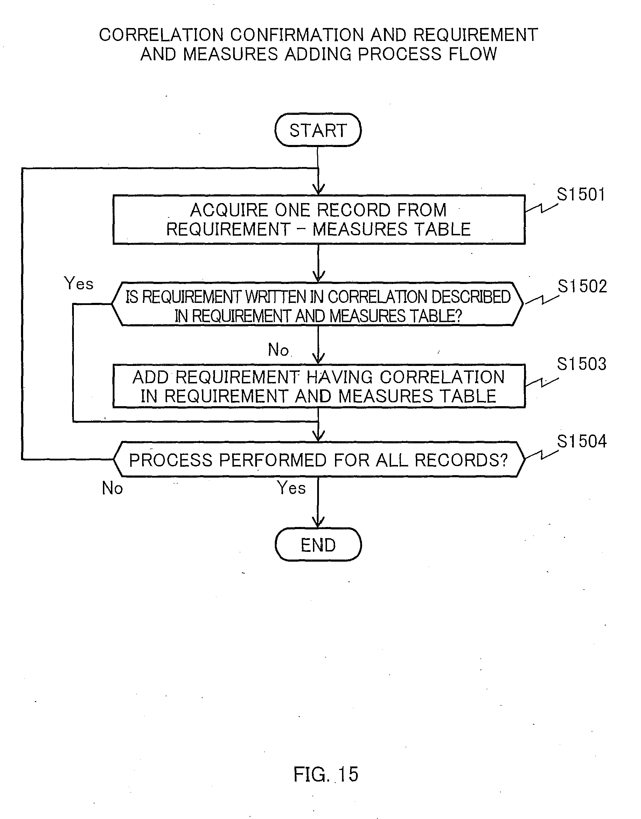

Description of the correlation confirmation, and requirement and measures adding process which is a process of S706 shown in Fig. 7 will be given next. Fig. 15 is a flowchart illustrating a correlation confirmation, and requirement and measures adding process flow. When the process is started, the device 10 firstly acquires one record from the function requirement and measures table 300, the function requirement and measures table 400, the management requirement and measures table 500 and the environment requirement and measures table 600 (hereinafter these four tables will be collectively called the "requirement and measures table") (S1501). For example, the device 10 acquires, as the requirement of zone boundary 2, one row of a record specified by the requirement ID of "FC001" being the first record from the function requirement and measures table 400.

Then the device 10 confirms whether the requirement of the requirement ID written in the correlation of the record acquired at S1501 is described in the requirement and measures table as the requirement of the same zone (S1502). Specifically, the device 10 acquires the values of "FG002, OP001" and "OPTIONAL" from the correlation item (e.g., reference mark 1707 in the requirement and measures table 400) of the record acquired at S1501, the requirement ID and the type (required or optional) of the requirement having correlation. The device 10 searches all the requirement and measures tables with the concerned requirement ID and the zone ("ZONE 2" in the present case) in which the concerned record belongs as the key. When a requirement with which the key matches is detected (S1502: YES), the device 10 proceeds to the next step S1504. When a requirement that matches the key is not detected (S1502: NO), the device 10 searches the requirement - measures DB 12 using the requirement ID as the key and adds to the requirement and measures table the security requirement 403 and the security measures 413 that corresponds to the requirement ID (S1503). At this time, a reference mark 1 or 2 is written, according to the correlation type (required or optional), in the additional information depending on correlation field of the requirement - measures DB 12. Specifically, the device 10 acquires from the requirement - measures DB 12 the record specified by FG002, and adds the record to the requirement and measures of zone boundary 2 in the requirement and measures table 300. Further, the device 10 stores "2", indicating an addition according to the correlation type of the option, into the additional information depending on correlation 1611 of the added record.

The device 10 performs the processes of S1501 to S1503 for all the records in the requirement and measures table, and when the device 10 determines that processes for all the records have been performed (S1504: YES), ends the correlation confirmation and the requirement and measures adding process.

Hereby, the device 10 completes a perfect requirement and measures table without any items missing, based on the requirement - measures DB 12 and the system configuration tables 100 and 200. Further, the attributes of the added security requirements can be distinguished at a glance since the security requirement added based on the correlation with the security requirements, has attached an identifying reference mark depending on whether the security requirement is required or optional to the system design.

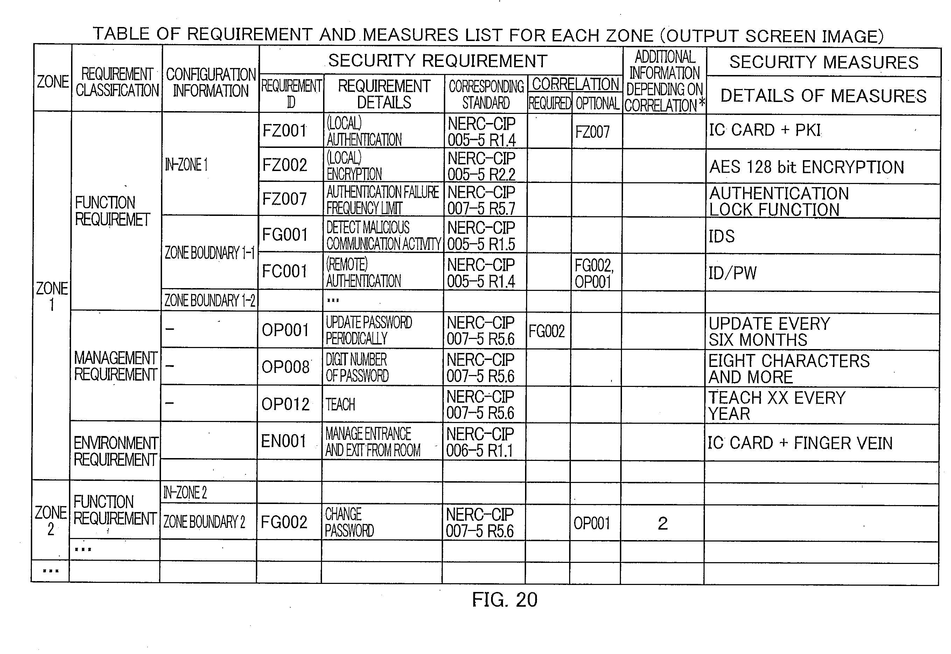

Returning to the entire process flow of Fig. 7, the device 10 organizes the requirement and measures tables (four tables being function requirement and measures tables 300 and 400, management requirement and measures table 500, and environment requirement and measures table 600) created in the processes of S702 to S706 into a summarized format with the zones configuring the system as the axes as in Fig. 8, and performs from the I/O unit 20c an output process such as displaying via the output device 36 (S707). Fig. 20 illustrates a configuration example of the requirement and measures list table 700 organized in zones.

The security designer of the system refers to the requirement and measures list table 700 for each zone outputted from the device 10 and checks such as whether or not there is a problem so to be able to carry out the subsequent design procedures.

Note that the above embodiment assumes that the requirement - measures DB 12 has the requirement and measures registered based on the requirements of the standards, however, this need not be a standard and the requirement and measures uniquely defined by the DB administrator may be registered instead.

Further, the applied level 409 and the level of the security measures 413 and the like of the requirement - measures DB 12 illustrated in Fig. 4 are set in three stages being High, Middle and Low, however, the way in which the level is divided is not limited to such.

As described above, according to the embodiments of the present invention, measures can be taken at a level required to each path by taking into consideration the requirement relating to data communication performed between two zones apart from the the requirement relating to the "path", and selecting the level of the measures according to the communicated information and not the level of the zone for the security measures for the requirement of the path. As a result, excess or underestimated measures can be prevented so that measures with consistency as a whole can be provided to the designer. Excess security measures for data communication between the zones can be prevented by determining the security measures therefor according to the level of information communicating through the path and not the level of the zones, and thus cost efficiency can be achieved.

Further, taking into consideration the requirement relating to two zones by categorizing into "zones", and extracting this requirement as the requirement and measures of the transmission source and the transmission destination allows prevention of missing requirements and measures thereby allowing easy design and development.

Furthermore, path requirement and measures being extracted for each access source zone and access destination zone can prevent unextracted requirement at the access source zone which has been a problem in conventional technology.

Effects as those given above prevent having to return the process in the system design work thereby contributing to effective security design work.

Moreover, the present invention is not limited to the embodiments described above and includes variously modified examples. For example, the above described embodiment is specifically described for the purpose of clearly illustrating the present invention and does not necessarily limit the invention to include all the configurations described. Further, a part of the configuration of the embodiments can be replaced with another configuration, and another configuration can be added to the configuration of one embodiment.

## Claims

1. A system security design support device that supports requirement defining and measures planning in security design of a system, comprising:
a requirement - measures information holding unit configured to
describe a design target system in a plurality of zones each being a security setting division,
classify the each zone into
a path coupling between the zones in an information communicable manner,
a zone boundary that is a coupling part between the path and the each zone, and
an in-zone part,
associate and register
security requirement information being information relating to a requirement in terms of security required by the design target system at the each in-zone, the each path, and the each zone boundary, and
security measures information being information indicating measures, classified into measures intensity levels, to be taken to satisfy the security requirement;
a system configuration information holding unit configured to hold the measures intensity levels in association with the corresponding each in-zone part and the each zone boundary, as well as the each path in association with the measures intensity levels and with the measures intensity level of corresponding information communicating through the path; and
a requirement defining and measures planning processing unit configured to
acquire from the system configuration information holding unit information of the in-zone part, the zone boundary, and the zone path that configure the design target system,
specify information of the zone boundary of a transmission source and the zone boundary of a transmission destination, relating to the each path,
apply the measures intensity level, to the transmission source zone boundary and the transmission destination zone boundary, associated to the path corresponding thereto, and
output information including correlation of the information of the in-zone part, the zone boundary, and the zone path, and the measures intensity levels.

2. The system security design support device according to claim 1, wherein the requirement - measures information holding unit further holds the security requirement and the security measures in association with
a function requirement associated with a function held by the each in-zone part, the each path and the each zone boundary,
a management requirement being a requirement for managing the function, and
an environment requirement being a requirement relating to an environment to implement the function.

3. The system security design support device according to claim 2, wherein the requirement defining and measures planning processing unit
classifies the each zone into the function requirement, the management requirement, and the environment requirement, and associates to each the security requirement information and the security measures information, and
further classifies the function requirement into the in-zone part and the zone boundary part of the each zone, and associates to each the security requirement information and the security measures information, to output from an I/O unit.

4. The system security design support device according to claim 2, wherein
the requirement - measures information holding unit further registers a correlation information between the each security requirement that is information indicating whether one of the security requirement relies on an existence of another one of the security requirement, in two types between the correlation is required and the correlation is optional and not required but is recommended,
the requirement defining and measures planning processing unit, after extracting the security requirement and the security measures from the requirement - measures information holding unit, confirms a correlation of the security requirement extracted, and extracts in addition from the requirement - measures information holding unit the security requirement and the security measures when determining that a requirement with the correlation is not yet extracted, and
outputs including the security requirement and the security measures added according to the correlation.

5. The system security design support device according to claim 4, wherein
the requirement defining and measures planning processing unit outputs, with regard to the security requirement added according to the correlation of the security requirement, in addition an item indicating whether an item is that added according to the required correlation or an item that is added according to the optional correlation.

6. A system security design support method that supports requirement defining and measures planning in security design of a system, configured to have a computer including a processor that performs arithmetic processing and a memory that stores data used by the processor, comprising:
describing a design target system in a plurality of zones each being security setting division,
classifying the each zone into
a path coupling between the zones in an information communicable manner,
a zone boundary that is a coupling part between the path and the each zone, and
an in-zone part,
associating and registering
security requirement information being information relating to a requirement in terms of security required by the design target system at the each in-zone, the each path; and the each zone boundary, and
security measures information being information indicating measures, classified into measures intensity levels, to be taken to satisfy the security requirement; and
holding the measures intensity levels in association with the corresponding each in-zone part and the each zone boundary, as well as the each path in association with the measures intensity levels and with the measures intensity level of corresponding information communicating through the path; wherein
the computer
acquires from the system configuration information holding unit information of the in-zone part, the zone boundary, and the zone path that configure the design target system,
specifies information of the zone boundary of a transmission source and the zone boundary of a transmission destination, relating to the each path,
applies the measures intensity level, to the transmission source zone boundary and the transmission destination zone boundary, associated to the path corresponding thereto, and
outputs information including correlation of the information of the in-zone part, the zone boundary, and the zone path, and the measures intensity levels.
